# EUROPEAN PATENT SPECIFICATION

(11) **EP 3 866 378 B1**
(45) Date of publication and mention of the grant of the patent: **29.10.2025**
(21) Application number: 21155127.0
(22) Date of filing: 04.02.2021
(51) Int. Cl.: H04L 5/00, H04L 1/00, H04L 5/14

(54) **FIRST APPARATUS, METHOD TO OPERATE A FIRST APPARATUS, SECOND APPARATUS, METHOD TO OPERATE A SECOND APPARATUS**
ERSTE VORRICHTUNG, VERFAHREN ZUM BETRIEB EINER ERSTEN VORRICHTUNG, ZWEITE VORRICHTUNG, VERFAHREN ZUM BETRIEB EINER ZWEITEN VORRICHTUNG
PREMIER APPAREIL, PROCÉDÉ POUR FAIRE FONCTIONNER UN PREMIER APPAREIL, SECOND APPAREIL, PROCÉDÉ POUR FAIRE FONCTIONNER LE SECOND APPAREIL

(30) Priority: 13.02.2020 WO PCT/EP2020/053734
(43) Date of publication of application: 18.08.2021
(73) Proprietor: Nokia Technologies Oy, 02610 Espoo (FI)
(72) Inventor: POCOVI, Guillermo, 9000 Aalborg (DK); ABREU, Renato Barbosa, 9000 Aalborg (DK); JACOBSEN, Thomas Haaning, 9400 Norresundby (DK)
(74) Representative: Script Intellectual Property LLP

(56) References cited:
- US-A1- 2019 254 053
- HUAWEI ET AL: "Other aspects for URLLC/IIOT enhancements", vol. RAN WG1, no. Reno, USA; 20191118 - 20191122, 9 November 2019 (2019-11-09), XP051823682, Retrieved from the Internet <URL:https://ftp.3gpp.org/tsg_ran/WG1_RL1/TSGR1_99/Docs/R1-1912919.zip R1-1912919.docx> [retrieved on 20191109]

## Description

### Field of the invention

Various example embodiments relate to feedback enhancements for scheduling in radio networks.

### Background

5G NR standard allows flexible TDD operation (TDD: Time Division Duplex) for unpaired spectrum. In a nutshell, any radio slot can be configured as DL-only, UL-only, or mixed DL and UL. Furthermore, flexible symbols can be also configured where the link direction (UL/DL) can be selected statically, semi-statically and/or in a dynamic manner (via Slot Format Indication (SFI) or dynamic grant).

Huawei et al: "Other aspects for URLLC/IIOT enhancements" 3GPP draft; R1-192919 discloses a solution which introduces indicating multiple K1 values for one SPS configuration, where a cluster of SPS PDSCHs of this SPS configuration can be associated with different K1 values to ensure their SPS HARQ-ACKs are pointed to the same slot/sub-slot which does not overlap with DL symbol. Another solution is to allow the UE to postpone the collided SPS HARQ-ACK to the UL slot/sub-slot available for HARQ-ACK transmission.

US 2019/254053 discloses a method for handling HARQ-ACK in cases of conflict. In an approach to handle HARQ-ACK conflict, UE may use a backup value (K1_0) of timing for given PDSCH to the DL ACK. The UE may keep two or more values of timing for a given PDSCH to the DL ACK. One is the original or primary timing value, and other(s) are back up values. If HARQ-ACK conflict happens in slot n+K1, the UE may try to HARQ-ACK in slot n+K1_0.

### Summary

A first aspect of this description is directed to a first apparatus according to appended claim 5.

The "synchronization" of this flexible feedback information between the network entities is established by using the plurality of offset indicators, for example a UE-specific set of offset indicators is known to the UE and the gNB and also an a-priori known iteration scheme for the set is known to both the UE and the gNB. In particular, different sets for different UEs may coexist. As a result, feedback configuration could be less coupled to the TDD allocation pattern and the timing of the scheduled downlink resources. Moreover, large HARQ-ACK codebook sizes are avoided as the uplink radio resources are determined in dependence on the position of the respective downlink radio resource and the set of offset indicators, for example arranged in form of the linked-list.

Accordingly, feedback information for semi-persistent scheduled downlink data is provided with an increased flexibility. Compared to the prior art, the k1 set in form of the plurality of offset indicators - is to a large extent independent of the timing of the SPS configuration (periodicity, offset) or TDD frame structure. In other words, if SPS or TDD configuration changes, UE may still use the same k1 set. Moreover, the signaling overhead could be reduced, as the respective apparatus determines the mapping and the k1 set may remain active.

According to an advantageous example, the first apparatus is further configured to determine, for at least one of the plurality of offset indicators, a first position in an allocation pattern by applying the at least one of the offset indicators as an offset to a second position of the data in the allocation pattern; and map the feedback information to the radio resource at the determined first position upon determining, that the radio resource at the determined first position is valid.

Therefore, this iteration scheme provides advantageously an unambiguous and explicit specification of the uplink radio resource for the feedback information in form of the mapping.

According to an advantageous example, the first apparatus is further configured to postpone the transmission of the feedback information until a next available radio resource if the mapping was not successful, or drop the transmission of the feedback information if the mapping was not successful.

According to an advantageous example, the first apparatus is further configured to drop the transmission of the feedback information if the mapping was not successful.

Dropping the feedback information represents a trade-off between successfully submitted feedback informations and a reduction of control overhead. Transmitting HARQ-ACK feedback as early as possible is beneficial for latency, since retransmissions can be employed in case the initial transmission was not correctly decoded. The reasoning for dropping HARQ feedback information is that it is anyway too late to perform HARQ retransmission (e.g. due to tight latency requirement), so feedback information could be useless.

According to an advantageous example, the first apparatus is further configured to receive the plurality of offsets.

Therefore, the second apparatus is in charge of determining the offsets in its serving cell.

According to an advantageous example, the first apparatus is further configured to receive a start indicator; and map the feedback information to the radio resource in dependence on the plurality of offset indicators and in dependence on the received start indicator, wherein the start indicator determines the first one of the offset indicators.

Advantageously, the starting point for trying to find a mapping is provided throughout the cell.

According to an advantageous example, the first apparatus is further configured to receive a SPS configuration comprising the plurality of offset indicators.

Advantageously, the serving second apparatus provides the feedback configuration for the cell in form of the set/plurality of offset indicators via the SPS configuration. A second aspect of this description is directed to a method for operating a first apparatus according to appended claim 1.

A third aspect of this description is directed to a second apparatus according to appended claim 9.

According to an advantageous example, the second apparatus is further configured to determine, for at least one of the plurality of offset indicators, a first position in an allocation pattern by applying the at least one of the plurality of offset indicators as an offset to a second position of the data in the allocation pattern; and map the feedback information to the radio resource at the determined first position upon determining, that the radio resource at the determined first position is valid.

According to an advantageous example, the second apparatus is further configured to postpone the reception of the feedback information until a next available radio resource if the mapping was not successful, or drop the reception of the feedback information if the mapping was not successful.

According to an advantageous example, the second apparatus is further configured to drop the reception of the feedback information if the mapping was not successful.

According to an advantageous example, the second apparatus is further configured to determine the plurality of offset indicators; and transmit the plurality of offset indicators.

According to an advantageous example, the second apparatus is further configured to transmit a start indicator; and map the feedback information to the radio resource in dependence on the plurality of offset indicators and in dependence on the received start indicator, wherein the start indicator determines the first one of the offset indicators.

A fourth aspect of this description is directed to a method to operate a second apparatus according to appended claim 3.

A fifth aspect of this description is directed to a radio communications network comprising the first apparatus according to the first aspect and the second apparatus according to the third aspect.

A sixth aspect of this description is directed to a method to operate a radio communications network, wherein the method comprises the method to operate the first apparatus according to the second aspect and the method to operate the second apparatus according to the fourth aspect.

### Brief description of the figures

In the drawing show:
- Figure 1: a schematical block diagram for operating a first apparatus of a radio communications network;
- Figure 2: a schematical block diagram for operating a second apparatus of a radio communications network;
- Figure 3: schematically a flowchart;
- Figure 4: a schematical sequence diagram;
- Figure 5: schematically a mapping of downlink radio resources to uplink radio resources; and
- Figure 6: schematically a cellular radio communications network.

### Description

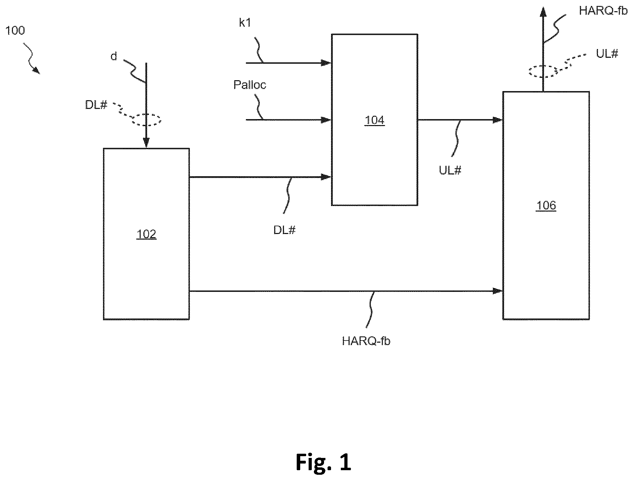

Figure 1 depicts a schematical block diagram for operating a first apparatus 100 of a radio communications network. The first apparatus 100 determines, according to a processing module 102, a HARQ feedback information HARQ-fb for downlink data d. The HARQ feedback information HARQ-fb is part of a Hybrid Automatic Repeat reQuest (hybrid ARQ or HARQ), which is a combination of high-rate forward error-correcting coding and ARQ error-control.

Feedback information comprises at least one bit, in particular a plurality of bits, which represent the reception status of the received data.

The downlink data d was received via receiving means from a second apparatus of the radio communications network via a semi-persistent-scheduled downlink radio resource DL# of a TDD, Time Division Duplex, allocation pattern Palloc. The first apparatus 100 maps, according to a processing module or mapping means 104, the semi-persistent-scheduled downlink radio resource DL# to an uplink radio resource UL# of the TDD allocation pattern Palloc in dependence on at least one of a plurality of offset indicators, e.g. a set k1. In other words, the feedback information HARQ-fb is mapped to the uplink radio resource UL# in dependence on the plurality of offset indicators and in dependence on the semi-persistent-scheduled downlink radio resource DL#, which transports the downlink data d. The first apparatus 100 transmits, according to a processing module or transmitting means 106, if the mapping 104 was successful, the determined HARQ feedback information HARQ-fb for the downlink data d via the mapped uplink radio resource UL# towards the second apparatus.

Time Division Duplexing, TDD, comprises to use one subset of radio resources, in particular symbols, being used for downlink transmissions and another subset of radio resources, in particular symbols, for uplink transmission. A further subset of radio resources could be used for transceiver switching and guarding.

According to an example, the first apparatus 100 is a radio terminal or user equipment, UE. The second apparatus is a central node of the radio communications network like a next generation NodeB, short gNB.

A reference to an uplink radio resource in this description comprises slots and sub-slots. The provided solution is therefore not only applicable to a slot operation but also a sub-slot operation, which allows more granular PUCCH timing indication than slot operation only (PUCCH: Physical Uplink Control Channel).

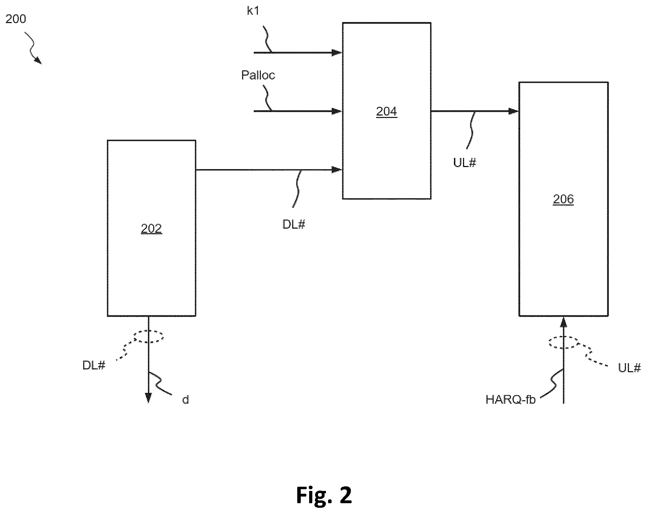

Figure 2 depicts a schematical block diagram for operating the second apparatus 200 of the radio communications network. The second apparatus 200 transmits, according to a processing module or transmitting means 202, downlink data d towards the first apparatus via the semi-persistent-scheduled downlink radio resource DL# of the TDD allocation pattern Palloc. The second apparatus 200 maps, according to a processing module or mapping means 204, the semi-persistent-scheduled downlink radio resource DL# to the uplink radio resource UL# of the TDD allocation pattern Palloc in dependence on at least one of a plurality of offset indicators, e.g. a set k1. According to an example, the mapping and determination of the uplink radio resource UL# is equal for both the first and second apparatus. According to an alternative example, where the mapping in gNB and UE could result in different outcome, is for dynamic TDD pattern, where the UL/DL direction is signaled to the UE via SFI.

The apparatus 200 receives, according to a processing module or receiving means 206, if the mapping 204 was successful, the HARQ feedback information HARQ-fb for the downlink data d via the mapped uplink radio resource UL# from the first apparatus.

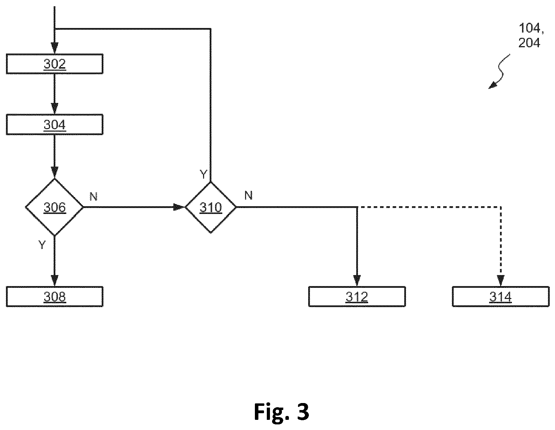

Figure 3 depicts schematically an iteration through a set, in which the offset indicators are arranged. The following is both valid for the first and second apparatus and represent the processing modules 104 and 204. A singly linked list is just an example of arranging the plurality offset indicators, which come as a set. Of course, the plurality of offset indicators could be arranged in a different data structure, like a double-linked list, a circular linked list or the like.

According to a processing module 302, the next offset indicator is taken from the set. For the selected offset indicator, according to a processing module or determination means 304, a first position in the TDD allocation pattern is determined by applying the selected offset indicator as an offset to a second position of the downlink radio resource, in which the downlink data connected to the HARQ-feedback information was received, of the TDD allocation pattern Palloc. In other words, the second position corresponds to the position / slot of the downlink data.

According to a processing module or determination means 306, a determination is made whether the determined first position is a valid uplink radio resource for HARQ feedback information transmission. If the former is not the case, then, according to a processing module or determination means 310, a determination is made whether there are still offset indicators in the set, which have not been visited. If there are still offset indicators, which have not been visited, then the next offset indicator is selected in the processing module or selection means 302. If there are no further offset indicators, then, according to a processing module 314, the HARQ feedback information is dropped in a processing module 314 or postponed 312.

According to an example, the valid UL resource / slot is determined based on a dynamic TDD configuration. Dynamic TDD configuration allows to map flexible symbols to either DL or UL via dynamic signaling (DCI containing Slot Format Indicator (SFI)). However, determining the valid UL resource based on semi-static configuration is preferred, since both UE and gNB have always same understanding of TDD frame format.

According to a further example, the valid UL resource / slot is determined based on a semi-static TDD configuration. According to an example, for a specific HARQ feedback information, one or more steps according to the processing module 312 are conducted, and finally the processing module 314 for dropping the HARQ feedback information is conducted.

The number and scheme, which indicate how to postpone and drop HARQ feedback information, is known to both the first and second apparatus and can be part of the configuration. In other words, SPS HARQ-ACK feedback information is postponed to next available occasion if none of the configured offset indicators k1 result in a valid PUCCH occasion.

According to a further example, the HARQ feedback information is immediately dropped after an occurrence of a negative check in processing module 310. In other words, SPS HARQ-ACK feedback information is dropped if none of the configured offset indicators k1 results in a valid PUCCH occasion.

Consequently, for each offset indicator iterated through, it is determined whether an uplink radio resource is available at a distance according to the offset indicator.

If, according to processing module or determination means 306, a determination is made that the radio resource, that is explicitly defined by the selected offset indicator and the TDD semi-persistent scheduled downlink radio resource, then processing module or mapping means 308 maps the downlink radio resource to the radio resource at the determined first position. In other words, upon determining, according to the processing module or determination means 306, that the radio resource at the determined first position is valid, especially is of an uplink type, then the HARQ feedback information is to be transmitted in the uplink direction via the radio resource at the first position, namely via the mapped uplink radio resource.

As mentioned, the proposed scheme provides a flexible mapping of SPS HARQ-ACK bits to PUCCH resources to avoid HARQ-ACK dropping due to conflicts with the TDD frame/slot structure.

The signalling is reduced, while providing a balance of the number of HARQ-ACK bits on the available uplink radio resources.

According to a further example, the set k1 comprises an indication for the feedback information to be sent in later valid occasion. For example, a valid transmission occasion for the feedback information needs to be a valid uplink slot and needs to be within the channel occupancy time, COT. The COT is informed to UEs by a multicast group common PDCCH. The gNB gains access to the channel and informs the COT to the UE during DL period through a multi-cast signalling. For example, a non-numerical, NN, entry in the set k1 allows the UE to postpone the transmission of the feedback information to a later valid occasion. This is especially advantageous for operation in unlicensed bands, such as New Radio Unlicensed, NR-U.

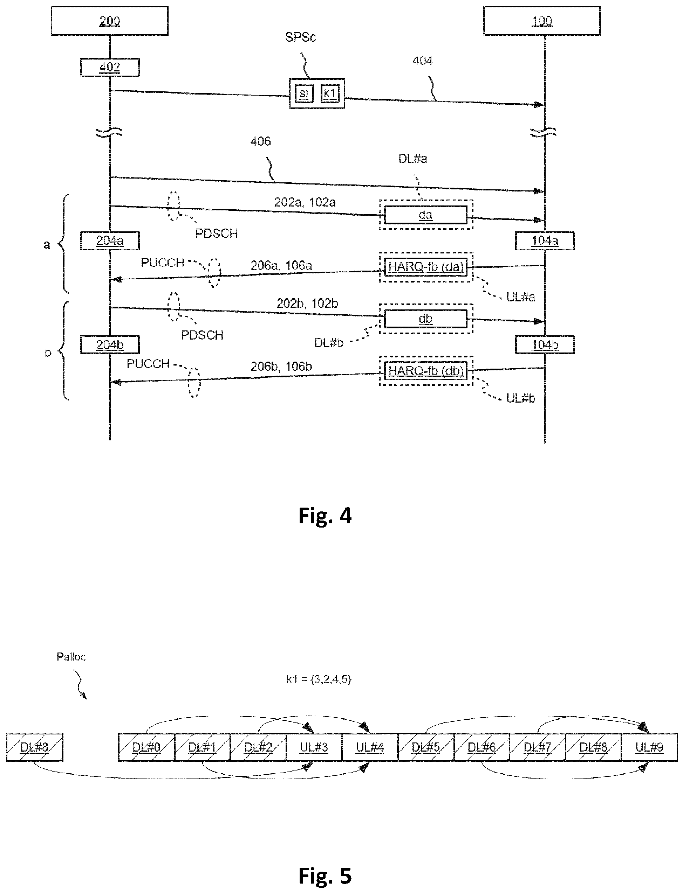

Figure 4 depicts a schematical sequence diagram. The indices a and b reference different communication processes. The second apparatus 200 determines, according to a processing module or determination means 402, the plurality of offset indicators in form of a set or set k1. In other words, the second apparatus 200 determines at least one set k1 of offset indicators based on the TDD frame/slot structure and the SPS configuration, wherein the set is to be used after an activation.

The second apparatus 200 transmits, according to a transmission 404 via transmission means, the determined set k1 as part of a SPS configuration SPSc (SPS: Semi-Persistent Scheduling) to the first apparatus 100. In other words, the second apparatus 200 provides the first apparatus 100 with one or multiple SPS configurations SPSc via RRC signaling (RRC: Radio Resource Control). For example, a field containing the set k1 is added to the existing *SPS-Config* information element, which allows separate definition of the set k1 per SPS configuration. Alternatively, the proposed *k1* set can be configured as part of *PUCCH-Config* information element, which would apply to all the active SPS configurations for a given UE.

According to a transmission 406 via transmission means, the semi-persistent scheduling, SPS, is activated via DCI, Downlink Control Indication, signaling scrambled with CS-RNTI, Configured Scheduling Radio Network Temporary Identifier. Semi-persistent scheduling, SPS, refers to a plurality of pre-configured radio resources scheduled in a recurring or periodic manner. SPS allocates radio resources for a period of time. In SPS the first apparatus 100 is pre-configured by the second apparatus 200 with the SPS-RNTI and a periodicity. Once configured and activated via an activation DCI, the first apparatus 100 receives the downlink data at the configured periodicity.

When a SPS PDSCH, Physical Downlink Shared Channel, is received on (sub-)slot n, the UE reports feedback information on (sub-)slot indicated via the selected offset indicator *k1**, where kl* is the first entry in the configured *k1* set resulting in a valid PUCCH occasion. Therefore, if the PUCCH resource determined by k1* HARQ-ACK timing in the activation DCI collides with DL or flexible symbols given by semi-static TDD configuration, the PUCCH transmission is cancelled.

After the transmission 206a and the reception 206b, the second apparatus 200 decodes, according to decoding means, the SPS HARQ feedback information HARQ-fb (da), HARQ-fb (db) from the first apparatus 100 and forwards the decoded SPS HARQ feedback information to higher layers or triggers a HARQ retransmission depending on whether an ACK, acknowledgement, or NACK, non-acknowledgement, is received via the HARQ feedback information.

According to example, there are different pre-set sets of offset indicators known to the first and second apparatus 100, 200. By transmitting a set indicator si in transmission 404 instead or together with the set k1, the second apparatus 200 clearly indicates for the first apparatus 100, which set to use for determining the HARQ feedback uplink radio resource UL#.

For each SPS PDSCH, Physical Downlink Shared Channel, belonging to such configuration SPSc, the each one of the first apparatus 100 and the second apparatus selects, for example, the first offset indicator in the set k1. The selection of the first offset indicator could immediately result in a valid PUCCH occasion. In other words, the mapping, according to each processing module 104, 204, of the semi-persistent-scheduled downlink radio resource DL# to the uplink radio resource UL# of the TDD allocation pattern in dependence on at least one of a plurality of offset indicators, is successful at the first selected offset indicator, e.g. no conflict with DL semi-static symbols is determined. We denote the selected offset indicator as *k1*.*

The k1 set does not need to be in increasing order, e.g. it can be kl= {3,2,4,5}. For a SPS PDSCH on downlink radio resource *DL#,* HARQ-ACK feedback information is transmitted on uplink radio resource UL# = DL# + 2 as the valid offset indicator is kl*=2. The first offset indicator kl*=3 results in an invalid PUCCH allocation, and so on. Therefore, the iterating scheme, that means in which order the set k1 is processed, is also known by both of the first and second apparatus 100, 200.

According to an example, the set k1 of offset indicators is defined in SPS-Config or PUCCH-Config information element. The pdsch-to-HARQ_feedback timing indicator in activation DCI is ignored, if present.

According to an example, a timing indicator in the activation DCI is used to shift/select starting point of the RRC-defined k1 set. For instance, if timing indicator 2 is signalled in the DCI, k1 set becomes kl={4,5,3,2} instead of kl={3,2,4,5}. In other words, a starting indicator in the sense of the timing indicator is determined by the second apparatus 200 and transmitted to the first apparatus 100. Then, the mapping, according to processing modules 104, 204 of the semi-persistent-scheduled downlink radio resource DL# to the uplink radio resource UL# of the TDD allocation pattern is determined in dependence on at least one of a plurality of offset indicators k1# and in dependence on the received start indicator, wherein the start indicator determines the first one of the offset indicators k1# to be iterated through.

According to an example, the set k1 of offset indicators in SPS-Config or PUCCH-Config information element indicates multiple offsets relative to the pdsch-to-HARQ_feedback value indicated in the activation DCI. As an example, a set k1={3,2,4,5} can be derived from e.g. k1_dci = 3 in activation DCI and k1_set_SPS_RRC = {0,-1,1,2} via RRC configuration.

According to an example, multiplexing of SPS HARQ-ACK feedback information with dynamic PDSCH HARQ-ACK feedback information on a Type-1 HARQ-ACK codebook can be achieved with reduced additional modification as follows: The set of values according to the set k1 is also present in the higher-layer parameter dl-DataToUL-ACK which is used for the HARQ-ACK codebook construction.

According to an example, multiplexing of SPS HARQ-ACK feedback information with dynamic PDSCH HARQ-ACK feedback information on a Type-1 HARQ-ACK codebook can be achieved with reduced additional modification as follows: The set k1 of offset indicators for HARQ-ACK Type-1 codebook construction consists on a union of the existing higher-layer configured dl-DataToUL-ACK set and the proposed SPS-specific set k1 (or sets, if there are more than one active SPS configuration with separate k1 definition). In this example, the set k1 is fully defined by RRC signaling according to processing module 404.

Figure 5 depicts schematically a mapping of downlink radio resources to uplink radio resources. For instance, with respect to the shown TDD frame structure with downlink radio resources DL# and uplink radio resources, the mapping is shown which is achieved by iterating through the set k1 = {3,2,4,5}.

For example, the transmitting and receiving side have DL#0 as a starting point and begin to search for a valid uplink. The first iteration DL#0 + 3 results in a valid uplink resource UL#3. The iteration is stopped.

For example, the transmitting and receiving side have DL#2 as a starting point and begin to search for a valid uplink. The first iteration DL#2 + 3 results in the downlink resource DL#5. In the second iteration DL#2 + 2, UL#4 is recognized as a valid uplink resource UL#3. The iteration is stopped.

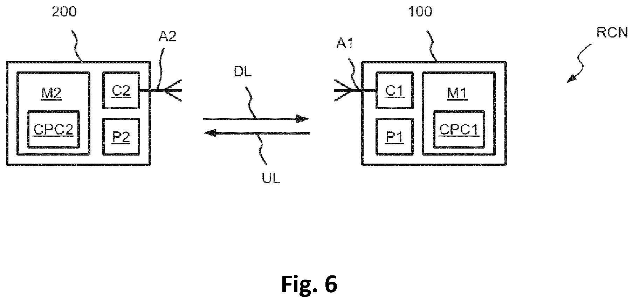

Figure 6 depicts schematically a radio communications network RCN. The first apparatus 100 comprises at least one processor P1 that represents determining means, at least one memory M1 including computer program code CPC1, and at least one communication module C1 that represents a transmitting means and a receiving means and that is coupled with at least one antenna A1. The at least one memory M1 and computer program code CPC1 are configured, with the at least one processor P1, and the at least one communication module C1, to cause the first apparatus 100 at least to operate according to the present description. The second apparatus 200 comprises at least one processor P2 that represents determining means, at least one memory M2 including computer program code CPC2, and at least one communication module C2 that represents a transmitting means and a receiving means and that is coupled with at least one antenna A2. The at least one memory M2 and computer program code CPC2 are configured, with the at least one processor P2, and the at least one communication module C2, to cause the second apparatus 200 at least to operate according to the present description. The first apparatus 100 transmits signals in a first direction UL to the second apparatus 200. The second apparatus 200 transmits signals in a second direction DL to the first apparatus 100.

According to an example the radio communications network RCN is a cellular radio communications network. The first direction UL is an uplink direction. The second direction DL is a downlink direction. The first apparatus 100 is a radio terminal. The second apparatus 200 is a base station.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A method for operating a first apparatus (100), wherein the method comprises:
determining (102) a feedback information for data (d) received via a semi-persistent-scheduled, SPS, downlink radio resource (DL#) from a second apparatus;
receiving a start indicator in the activation downlink control information, DCI, of the SPS transmission from the second apparatus;
mapping (104) the feedback information to an uplink radio resource (UL#) in dependence on a plurality of ordered offset indicators (k1#) as defined through radio resource control, RRC, signalling and in dependence on the start indicator, wherein
the uplink resource for transmitting the feedback information is determined by initiating an iterative search through the plurality of offset indicators (k1#) according to the defined order,
the start indicator determining the first one of the offset indicators (k1#) to be used for the iterative search; wherein at each step of the iterative search the offset indicated by the selected offset indicator is applied to the semi-persistent-scheduled downlink resource so as to determine a slot in a configured time division duplex, TDD, allocation pattern; wherein the determined uplink radio resource is the first determined slot in the iterative search that is configured as an uplink resource in the TDD allocation pattern; and
transmitting (106), if the mapping (104) was successful, the feedback information for the data (d) via the mapped uplink radio resource (UL#) to the second apparatus.

2. A method according to claim 1 wherein the method further comprises
postponing (312) the transmission of the feedback information until a next available uplink radio resource if the mapping (308) was not successful, or
dropping (314) the transmission of the feedback information if the mapping (308) was not successful.

3. A method to operate a second apparatus (200), wherein the method comprises:
transmitting (202) data (d) via a semi-persistent-scheduled, SPS, downlink radio resource (DL#) to a first apparatus;
determining a start indicator and transmitting the start indicator to the second apparatus in the activation downlink control information, DCI, of the SPS transmission;
mapping (204) a feedback information to an uplink radio resource (UL#) in dependence on a plurality of ordered offset indicators (k1#) as defined through radio resource control, RRC, signalling and in dependence on the start indicator, wherein
the uplink resource for receiving the feedback information is determined by initiating an iterative search through the plurality of offset indicators (k1#) according to the defined order,
the start indicator determining the first one of the offset indicators (k1#) to be used for the iterative search; wherein at each step of the iterative search the offset indicated by the selected offset indicator is applied to the semi-persistent-scheduled downlink resource so as to determine a slot in a configured time division duplex, TDD, allocation pattern; wherein the determined uplink radio resource is the first determined slot in the iterative search that is configured as an uplink resource in the TDD allocation pattern; and
receiving (206), if the mapping (308) was successful, the feedback information for the data (d) via the mapped uplink radio resource (UL#) from the first apparatus.

4. A method according to claim 3, wherein the method further comprises
postponing (312) the reception of the feedback information until a next available uplink radio resource if the mapping (308) was not successful, or
dropping (314) the reception of the feedback information if the mapping (308) was not successful.

5. A first apparatus (100) comprising at least
determining means to determine (102) a feedback information for data (d) received via a semi-persistent-scheduled, SPS, radio resource (DL#) from a second apparatus;
receiving means to receive a start indicator in the activation downlink control information, DCI, of the SPS transmission from the second apparatus;
mapping means to map (104) the feedback information to a radio resource (UL#) in dependence on a plurality of ordered offset indicators (k1#) as defined through radio resource control, RRC, signalling and in dependence on an obtained start indicator,
wherein the uplink resource for transmitting the feedback information is determined by initiating an iterative search through the plurality of offset indicators (k1#) according to the defined order,
the start indicator determining the first one of the offset indicators (k1#) to be used for the iterative search; wherein at each step of the iterative search the offset indicated by the selected offset indicator is applied to the semi-persistent-scheduled downlink resource so as to determine a slot in a configured time division duplex, TDD, allocation pattern; wherein the determined uplink radio resource is the first determined slot in the iterative search that is configured as an uplink resource in the TDD allocation pattern; and
transmitting means to transmit (106), if the mapping (104) was successful, the feedback information for the data (d) via the mapped uplink radio resource (UL#) to the second apparatus.

6. The first apparatus (100) according to claim 5, further comprising
postponing means to postpone (312) the transmission of the feedback information until a next available uplink radio resource if the mapping (308) was not successful, or
dropping means to drop (314) the transmission of the feedback information if the mapping (308) was not successful.

7. The first apparatus (100) according to one of claims 5 to 6, further comprising receiving means to receive the plurality of offsets (k1#).

8. The first apparatus (100) according to one of the claims 5 to 7, further comprising receiving means to receive a SPS configuration (SPSc) comprising the plurality of offset indicators (k1#).

9. A second apparatus (200) comprising at least
transmitting means to transmit (202) data (d) via a semi-persistent-scheduled, SPS, downlink radio resource (DL#) to a first apparatus;
determining means to determine a start indicator and transmitting means to transmit the start indicator to the second apparatus in the activation downlink control information, DCI, of the SPS transmission;
mapping means to map (204) a feedback information to an uplink radio resource (UL#) in dependence on a plurality of ordered offset indicators (k1#) as defined through radio resource control, RRC, signalling and in dependence on the determined start indicator, wherein the uplink resource for receiving the feedback information is determined by initiating an iterative search through the plurality of offset indicators (k1#) according to the defined order,
the start indicator determining the first one of the offset indicators (k1#) to be used for the iterative search; wherein at each step of the iterative search the offset indicated by the selected offset indicator is applied to the semi-persistent-scheduled downlink resource so as to determine a slot in a configured time division duplex, TDD, allocation pattern; wherein the determined uplink radio resource is the first determined slot in the iterative search that is configured as an uplink resource in the TDD allocation pattern; and
receiving means to receive (206), if the mapping (308) was successful, the feedback information for the data (d) via the mapped uplink radio resource (UL#) from the first apparatus.

10. The second apparatus (200) according to claim 9, further comprising
postponing means to postpone (312) the reception of the feedback information until a next available uplink radio resource if the mapping (308) was not successful, or
dropping means to drop (314) the reception of the feedback information if the mapping (308) was not successful.

11. The second apparatus (200) according to one of the claims 9 to 10, further comprising
determination means to determine the plurality of offset indicators (k1#); and
transmitting means to transmit the plurality of offset indicators.

## Patentansprüche

1. Verfahren zum Betreiben einer ersten Einrichtung (100), wobei das Verfahren Folgendes umfasst:
Bestimmen (102) von Feedbackinformationen für Daten (d), die via eine semipersistente geplante, SPS, Downlinkfunkressource (DL#) von einer zweiten Einrichtung empfangen wurden;
Empfangen eines Startindikators in den Aktivierungsdownlinksteuerinformationen, DCI, der SPS-Übertragung von der zweiten Einrichtung;
Zuordnen (104) der Feedbackinformationen zu einer Uplinkfunkressource (UL#) in Abhängigkeit von einer Vielzahl von geordneten Versatzindikatoren (k1#), wie durch eine Funkressourcensteuerungs(RRC)-Signalisierung definiert, und in Abhängigkeit vom Startindikator, wobei die Uplinkressource zum Übertragen der Feedbackinformationen durch Initiieren einer iterativen Suche durch die Vielzahl von Versatzindikatoren (k1#) gemäß der definierten Reihenfolge bestimmt wird, wobei der Startindikator den ersten der Versatzindikatoren (k1#) bestimmt, der für die iterative Suche zu verwenden ist; wobei bei jedem Schritt der iterativen Suche der durch den ausgewählten Versatzindikator angezeigte Versatz auf die semipersistente geplante Downlinkressource angewandt wird, um einen Schlitz in einem ausgelegten Zeitduplex(TDD)-Zuteilungsmuster zu bestimmen; wobei die bestimmte Uplinkfunkressource der erste bestimmte Schlitz in der iterativen Suche ist, der als eine Uplinkressource im TDD-Zuteilungsmuster ausgelegt ist; und
wenn das Zuordnen (104) erfolgreich war, Übertragen (106) der Feedbackinformationen für die Daten (d) via die zugeordnete Uplinkfunkressource (UL#) zur zweiten Einrichtung.

2. Verfahren nach Anspruch 1, wobei das Verfahren ferner Folgendes umfasst
Verschieben (312) der Übertragung der Feedbackinformationen bis zu einer nächsten verfügbaren Uplinkfunkressource, wenn das Zuordnen (308) nicht erfolgreich war, oder
Aussetzen (314) der Übertragung der Feedbackinformationen, wenn das Zuordnen (308) nicht erfolgreich war.

3. Verfahren zum Betreiben einer zweiten Einrichtung (200), wobei das Verfahren Folgendes umfasst:
Übertragen (202) von Daten (d) via eine semipersistente geplante, SPS, Downlinkfunkressource (DL#) zu einer ersten Einrichtung;
Bestimmen eines Startindikators und Übertragen des Startindikators in den Aktivierungsdownlinksteuerinformationen, DCI, der SPS-Übertragung zur zweiten Einrichtung;
Zuordnen (204) von Feedbackinformationen zu einer Uplinkfunkressource (UL#) in Abhängigkeit von einer Vielzahl von geordneten Versatzindikatoren (k1#), wie durch eine Funkressourcensteuerungs(RRC)-Signalisierung definiert, und in Abhängigkeit vom Startindikator, wobei die Uplinkressource zum Empfangen der Feedbackinformationen durch Initiieren einer iterativen Suche durch die Vielzahl von Versatzindikatoren (k1#) gemäß der definierten Reihenfolge bestimmt wird,
wobei der Startindikator den ersten der Versatzindikatoren (k1#) bestimmt, der für die iterative Suche zu verwenden ist; wobei bei jedem Schritt der iterativen Suche der durch den ausgewählten Versatzindikator angezeigte Versatz auf die semipersistente geplante Downlinkressource angewandt wird, um einen Schlitz in einem ausgelegten Zeitduplex(TDD)-Zuteilungsmuster zu bestimmen; wobei die bestimmte Uplinkfunkressource der erste bestimmte Schlitz in der iterativen Suche ist, der als eine Uplinkressource im TDD-Zuteilungsmuster ausgelegt ist; und
wenn das Zuordnen (308) erfolgreich war, Empfangen (206) der Feedbackinformationen für die Daten (d) via die zugeordnete Uplinkfunkressource (UL#) von der ersten Einrichtung.

4. Verfahren nach Anspruch 3, wobei das Verfahren ferner Folgendes umfasst
Verschieben (312) des Empfangs der Feedbackinformationen bis zu einer nächsten verfügbaren Uplinkfunkressource, wenn das Zuordnen (308) nicht erfolgreich war, oder
Aussetzen (314) des Empfangs der Feedbackinformationen, wenn das Zuordnen (308) nicht erfolgreich war.

5. Erste Einrichtung (100), die mindestens Folgendes umfasst
Bestimmungsmittel zum Bestimmen (102) von Feedbackinformationen für Daten (d), die via eine semipersistente geplante, SPS, funkressource (DL#) von einer zweiten Einrichtung empfangen wurden;
Empfangsmittel zum Empfangen eines Startindikators in den Aktivierungsdownlinksteuerinformationen, DCI, der SPS-Übertragung von der zweiten Einrichtung;
Zuordnungsmittel zum Zuordnen (104) der Feedbackinformationen zu einer funkressource (UL#) in Abhängigkeit von einer Vielzahl von geordneten Versatzindikatoren (k1#), wie durch eine Funkressourcensteuerungs(RRC)-Signalisierung definiert, und in Abhängigkeit von einem erhaltenen Startindikator, wobei die Uplinkressource zum Übertragen der Feedbackinformationen durch Initiieren einer iterativen Suche durch die Vielzahl von Versatzindikatoren (k1#) gemäß der definierten Reihenfolge bestimmt wird,
wobei der Startindikator den ersten der Versatzindikatoren (k1#) bestimmt, der für die iterative Suche zu verwenden ist; wobei bei jedem Schritt der iterativen Suche der durch den ausgewählten Versatzindikator angezeigte Versatz auf die semipersistente geplante Downlinkressource angewandt wird, um einen Schlitz in einem ausgelegten Zeitduplex(TDD)-Zuteilungsmuster zu bestimmen; wobei die bestimmte Uplinkfunkressource der erste bestimmte Schlitz in der iterativen Suche ist, der als eine Uplinkressource im TDD-Zuteilungsmuster ausgelegt ist; und
wenn das Zuordnen (104) erfolgreich war, Übertragungsmittel zum Übertragen (106) der Feedbackinformationen für die Daten (d) via die zugeordnete Uplinkfunkressource (UL#) zur zweiten Einrichtung.

6. Erste Einrichtung (100) nach Anspruch 5, die ferner Folgendes umfasst
Verschiebungsmittel zum Verschieben (312) der Übertragung der Feedbackinformationen bis zu einer nächsten verfügbaren Uplinkfunkressource, wenn das Zuordnen (308) nicht erfolgreich war, oder
Aussetzmittel zum Aussetzen (314) der Übertragung der Feedbackinformationen, wenn das Zuordnen (308) nicht erfolgreich war.

7. Erste Einrichtung (100) nach einem der Ansprüche 5 bis 6, die ferner Empfangsmittel zum Empfangen der Vielzahl von Versatz (k1#) umfasst.

8. Erste Einrichtung (100) nach einem der Ansprüche 5 bis 7, die ferner Empfangsmittel zum Empfangen einer SPS-Auslegung (SPSc) umfasst, die die Vielzahl von Versatzindikatoren (k1#) umfasst.

9. Zweite Einrichtung (200), die mindestens Folgendes umfasst
Übertragungsmittel zum Übertragen (202) von Daten (d) via eine semipersistente geplante, SPS, Downlinkfunkressource (DL#) zu einer ersten Einrichtung;
Bestimmungsmittel zum Bestimmen eines Startindikators und Übertragungsmittel zum Übertragen des Startindikators in den Aktivierungsdownlinksteuerinformationen, DCI, der SPS-Übertragung zur zweiten Einrichtung;
Zuordnungsmittel zum Zuordnen (204) von Feedbackinformationen zu einer Uplinkfunkressource (UL#) in Abhängigkeit von einer Vielzahl von geordneten Versatzindikatoren (k1#), wie durch eine Funkressourcensteuerungs(RRC)-Signalisierung definiert, und in Abhängigkeit vom bestimmten Startindikator, wobei die Uplinkressource zum Empfangen der Feedbackinformationen durch Initiieren einer iterativen Suche durch die Vielzahl von Versatzindikatoren (k1#) gemäß der definierten Reihenfolge bestimmt wird,
wobei der Startindikator den ersten der Versatzindikatoren (k1#) bestimmt, der für die iterative Suche zu verwenden ist; wobei bei jedem Schritt der iterativen Suche der durch den ausgewählten Versatzindikator angezeigte Versatz auf die semipersistente geplante Downlinkressource angewandt wird, um einen Schlitz in einem ausgelegten Zeitduplex(TDD)-Zuteilungsmuster zu bestimmen; wobei die bestimmte Uplinkfunkressource der erste bestimmte Schlitz in der iterativen Suche ist, der als eine Uplinkressource im TDD-Zuteilungsmuster ausgelegt ist; und
wenn das Zuordnen (308) erfolgreich war, Empfangsmittel zum Empfangen (206) der Feedbackinformationen für die Daten (d) via die zugeordnete Uplinkfunkressource (UL#) von der ersten Einrichtung.

10. Zweite Einrichtung (200) nach Anspruch 9, die ferner Folgendes umfasst
Verschiebungsmittel zum Verschieben (312) des Empfangs der Feedbackinformationen bis zu einer nächsten verfügbaren Uplinkfunkressource, wenn das Zuordnen (308) nicht erfolgreich war, oder
Aussetzmittel zum Aussetzen (314) des Empfangs der Feedbackinformationen, wenn das Zuordnen (308) nicht erfolgreich war.

11. Zweite Einrichtung (200) nach einem der Ansprüche 9 bis 10, die ferner Folgendes umfasst
Bestimmungsmittel zum Bestimmen der Vielzahl von Versatzindikatoren (k1#); und Übertragungsmittel zum Übertragen der Vielzahl von Versatzindikatoren.

## Revendications

1. Procédé pour faire fonctionner un premier appareil (100), dans lequel le procédé comprend les étapes suivantes :
déterminer (102) des informations de rétroaction pour des données (d) reçues d'un deuxième appareil via une ressource radio de liaison descendante à planification semi-persistante, SPS, (DL#) ;
recevoir du deuxième appareil un indicateur de départ dans les informations de contrôle de liaison descendante, DCI, d'activation de la transmission SPS ;
mapper (104) les informations de rétroaction à une ressource radio de liaison montante (UL#) en fonction d'une pluralité d'indicateurs de décalage (k1#) ordonnés tels que définis par une signalisation de contrôle de ressources radio, RRC, et en fonction de l'indicateur de départ, dans lequel la ressource de liaison montante pour transmettre les informations de rétroaction est déterminée en initiant une recherche itérative dans la pluralité d'indicateurs de décalage (k1#) suivant l'ordre défini, l'indicateur de départ déterminant le premier des indicateurs de décalage (k1#) à utiliser pour la recherche itérative ; dans lequel, à chaque étape de la recherche itérative, le décalage indiqué par l'indicateur de décalage sélectionné est appliqué à la ressource de liaison descendante à planification semi-persistante de sorte à déterminer un créneau dans un motif d'allocation duplex à répartition dans le temps, TDD, configuré ; dans lequel la ressource radio de liaison montante déterminée est le premier créneau déterminé dans la recherche itérative qui est configuré comme une ressource de liaison montante dans le motif d'allocation TDD ; et
si le mappage (104) a réussi, transmettre (106) au deuxième appareil les informations de rétroaction pour les données (d) via la ressource radio de liaison montante (UL#) mappée.

2. Procédé selon la revendication 1, dans lequel le procédé comprend en outre les étapes suivantes :
reporter (312) la transmission des informations de rétroaction jusqu'à une ressource radio de liaison montante disponible suivante si le mappage (308) n'a pas réussi, ou
abandonner (314) la transmission des informations de rétroaction si le mappage (308) n'a pas réussi.

3. Procédé pour faire fonctionner un deuxième appareil (200), dans lequel le procédé comprend les étapes suivantes :
transmettre (202) à un premier appareil des données (d) via une ressource radio de liaison descendante à planification semi-persistante, SPS, (DL#) ;
déterminer un indicateur de départ et transmettre l'indicateur de départ au deuxième appareil dans les informations de contrôle de liaison descendante, DCI, d'activation de la transmission SPS ;
mapper (204) des informations de rétroaction à une ressource radio de liaison montante (UL#) en fonction d'une pluralité d'indicateurs de décalage (k1#) ordonnés tels que définis par une signalisation de contrôle de ressources radio, RRC, et en fonction de l'indicateur de départ, dans lequel la ressource de liaison montante pour recevoir les informations de rétroaction est déterminée en initiant une recherche itérative dans la pluralité d'indicateurs de décalage (k1#) suivant l'ordre défini, l'indicateur de départ déterminant le premier des indicateurs de décalage (k1#) à utiliser pour la recherche itérative ; dans lequel, à chaque étape de la recherche itérative, le décalage indiqué par l'indicateur de décalage sélectionné est appliqué à la ressource de liaison descendante à planification semi-persistante de sorte à déterminer un créneau dans un motif d'allocation duplex à répartition dans le temps, TDD, configuré ; dans lequel la ressource radio de liaison montante déterminée est le premier créneau déterminé dans la recherche itérative qui est configuré comme une ressource de liaison montante dans le motif d'allocation TDD ; et
si le mappage (308) a réussi, recevoir (206) du premier appareil les informations de rétroaction pour les données (d) via la ressource radio de liaison montante (UL#) mappée.

4. Procédé selon la revendication 3, dans lequel le procédé comprend en outre les étapes suivantes
reporter (312) la réception des informations de rétroaction jusqu'à une ressource radio de liaison montante disponible suivante si le mappage (308) n'a pas réussi, ou
abandonner (314) la réception des informations de rétroaction si le mappage (308) n'a pas réussi.

5. Premier appareil (100) comprenant au moins
des moyens de détermination pour déterminer (102) des informations de rétroaction pour des données (d) reçues d'un deuxième appareil via une ressource radio à planification semi-persistante, SPS, (DL#) ;
des moyens de réception pour recevoir du deuxième appareil un indicateur de départ dans les informations de contrôle de liaison descendante, DCI, d'activation de la transmission SPS ;
des moyens de mappage pour mapper (104) les informations de rétroaction à une ressource radio (UL#) en fonction d'une pluralité d'indicateurs de décalage (k1#) ordonnés tels que définis par une signalisation de contrôle de ressources radio, RRC, et en fonction d'un indicateur de départ obtenu,
dans lequel la ressource de liaison montante pour transmettre les informations de rétroaction est déterminée en initiant une recherche itérative dans la pluralité d'indicateurs de décalage (k1#) suivant l'ordre défini, l'indicateur de départ déterminant le premier des indicateurs de décalage (k1#) à utiliser pour la recherche itérative ; dans lequel, à chaque étape de la recherche itérative, le décalage indiqué par l'indicateur de décalage sélectionné est appliqué à la ressource de liaison descendante à planification semi-persistante de sorte à déterminer un créneau dans un motif d'allocation duplex à répartition dans le temps, TDD, configuré ; dans lequel la ressource radio de liaison montante déterminée est le premier créneau déterminé dans la recherche itérative qui est configuré comme une ressource de liaison montante dans le motif d'allocation TDD ; et
des moyens de transmission pour, si le mappage (104) a réussi, transmettre (106) au deuxième appareil les informations de rétroaction pour les données (d) via la ressource radio de liaison montante (UL#) mappée.

6. Premier appareil (100) selon la revendication 5, comprenant en outre
des moyens de report pour reporter (312) la transmission des informations de rétroaction jusqu'à une ressource radio de liaison montante disponible suivante si le mappage (308) n'a pas réussi, ou
des moyens d'abandon pour abandonner (314) la transmission des informations de rétroaction si le mappage (308) n'a pas réussi.

7. Premier appareil (100) selon l'une des revendications 5 et 6, comprenant en outre des moyens de réception pour recevoir la pluralité de décalages (k1#).

8. Premier appareil (100) selon l'une des revendications 5 à 7, comprenant en outre
des moyens de réception pour recevoir une configuration SPS (SPSc) comprenant la pluralité d'indicateurs de décalage (k1#).

9. Deuxième appareil (200) comprenant au moins
des moyens de transmission pour transmettre (202) à un premier appareil des données (d) via une ressource radio de liaison descendante à planification semi-persistante, SPS, (DL#) ;
moyens de détermination pour déterminer un indicateur de départ et des moyens de transmission pour transmettre l'indicateur de départ au deuxième appareil dans les informations de contrôle de liaison descendante, DCI, d'activation de la transmission SPS ;
des moyens de mappage pour mapper (204) des informations de rétroaction à une ressource radio de liaison montante (UL#) en fonction d'une pluralité d'indicateurs de décalage (k1#) ordonnés tels que définis par une signalisation de contrôle de ressources radio, RRC, et en fonction de l'indicateur de départ déterminé, dans lequel la ressource de liaison montante pour recevoir les informations de rétroaction est déterminée en initiant une recherche itérative dans la pluralité d'indicateurs de décalage (k1#) suivant l'ordre défini,
l'indicateur de départ déterminant le premier des indicateurs de décalage (k1#) à utiliser pour la recherche itérative ; dans lequel, à chaque étape de la recherche itérative, le décalage indiqué par l'indicateur de décalage sélectionné est appliqué à la ressource de liaison descendante à planification semi-persistante de sorte à déterminer un créneau dans un motif d'allocation duplex à répartition dans le temps, TDD, configuré ; dans lequel la ressource radio de liaison montante déterminée est le premier créneau déterminé dans la recherche itérative qui est configuré comme une ressource de liaison montante dans le motif d'allocation TDD ; et
des moyens de réception pour, si le mappage (308) a réussi, recevoir (206) du premier appareil les informations de rétroaction pour les données (d) via la ressource radio de liaison montante (UL#) mappée.

10. Deuxième appareil (200) selon la revendication 9, comprenant en outre
des moyens de report pour reporter (312) la réception des informations de rétroaction jusqu'à une ressource radio de liaison montante disponible suivante si le mappage (308) n'a pas réussi, ou
des moyens d'abandon pour abandonner (314) la réception des informations de rétroaction si le mappage (308) n'a pas réussi.

11. Deuxième appareil (200) selon l'une des revendications 9 et 10, comprenant en outre
des moyens de détermination pour déterminer la pluralité d'indicateurs de décalage (k1#) ; et
des moyens de transmission pour transmettre la pluralité d'indicateurs de décalage.
